# EUROPEAN PATENT SPECIFICATION

(11) **EP 2 169 105 B1**
(45) Date of publication and mention of the grant of the patent: **18.12.2013**
(21) Application number: 09170909.7
(22) Date of filing: 22.09.2009
(51) Int. Cl.: D06F 39/08, D06F 33/02

(54) **Drum type washing machine**
Trommelwaschmaschine
Machine à laver à tambour

(30) Priority: 29.09.2008 JP 2008250129
(43) Date of publication of application: 31.03.2010
(73) Proprietor: Panasonic Corporation, Kadoma-shi Osaka 571-8501 (JP)
(72) Inventor: Horibe, Yasuyuki, Osaka 540-6207 (JP); Suzuki, Masahiro, Osaka 540-6207 (JP); Hagiwara, Hisashi, Osaka 540-6207 (JP)
(74) Representative: Muschke, Markus Artur Heinz

(56) References cited:
- JP-A- 2006 239 142

## Description

### TECHNICAL FIELD

The present invention relates to a drum type washing machine having a cylindrically shaped rotary drum with a bottom which is installed in a water tank for washing laundry in the rotary drum by rotationally driving the rotary drum.

### BACKGROUND ART

Such a drum type washing machine is configured in that a rotary drum is installed in a water tank in such manner that the direction of rotary axis is horizontal or inclined downward from the horizontal direction toward the rear side or bottom thereof from the open front side, having a circulating function such that water in the water tank is circulated by a circulating pump. This type of washing machine is already commonly known as described in the following.

In the Unexamined Japanese Patent Publication H11-276791 (Patent document 1), the technology disclosed is such that one pump is used as a circulating pump in the washing process (hereinafter "process" is called "step") or the rinsing step where the rinsing water or washing water is circulated, and in the initial stage of washing step, positive agitation of the detergent and washing water and early dissolving of the detergent are intended, while in the spin-drying and draining step, it is used as a drainage pump. Also disclosed is such a technology that a filter case is disposed halfway in the circulation passage at the suction side of the circulating pump, which collects impurities during water suction in order to prevent impurities from intruding into the circulating pump.

In the Unexamined Japanese Patent Publication 2005-58741 (Patent document 2), the technology disclosed is such that water in the water tank is circulated by a circulating pump, thereby preventing occurrence of such a phenomenon that the detergent gathers in a space where a heater is installed or in a specific space. Also disclosed is such a technology that the washing efficiency is enhanced by quickly heating the clothes before washing.

In the Unexamined Japanese Patent Publication 2006-223572 (Patent document 3), the technology disclosed is such that a circulating pump unit having a circulating pump section and a filtering section for catching wash waste such as waste thread is mounted on a base plate that is the bottom of the outer case of the washing machine. Since the circulating pump section is installed on the base plate via an elastic cushion, vibration of the pump motor is prevented from being propagated to the base plate when washing water in the water tank is circulated. In this way, the technology disclosed is such that it is possible to prevent the generation of noise that is caused due to resonance between pump motor noise and outer case vibration.

In the Unexamined Japanese Patent Publication 2006-239142 (Patent document 4), the technology disclosed is such that water in the water tank is injected around the heater for drying as well as into the rotary drum so that waste thread or the like sticking around the heater can be removed.

However, in all of the technologies for water circulation disclosed in Patent documents 1 to 3, the washing water is injected from the pipe end into the rotary drum only. Accordingly, in the initial stage of washing step, detergent solution containing a detergent not completely dissolved is injected directly to the laundry in the rotary drum, and the detergent not completely dissolved sometimes remain on and in the laundry after the end of washing. Also, when a softener is applied in the initial stage of rinsing step, a highly concentrated softener is injected directly to the laundry in the rotary drum, sometimes causing the laundry to be stained or the like. On the other hand, in the technology of Document 4, water is injected around the heater by using a special injection nozzle capable of injecting outside the rotary drum. As a result, the piping structure becomes further complicated, causing the cost to increase.

### SUMMARY

The present invention is such that detergent and softener are quickly dissolved in the washing water, and after that, washing water is supplied into the rotary drum, using no complicated structure and avoiding too much increase of the cost. In this way, it is possible to enhance the effect of detergent and softener and to prevent remaining of the detergent on the laundry or staining thereof.

The present invention comprises a cylindrically shaped rotary drum with a bottom, a water tank in which the rotary drum is installed in such manner that the direction of rotary axis is horizontal or inclined downward from the horizontal direction toward the rear side or bottom thereof from the open front side, a motor for rotationally driving the rotary drum, a water circulation system for circulating washing water in the water tank into the rotary drum by using a circulating pump equipped with a circulation motor disposed in the circulation passage and capable of changing the rotating speed through the circulation passage connected to the water tank, and a control unit for controlling the motor or the like to execute at least one of the washing step and the rinsing step, wherein the water circulation system is configured so as to guide the washing water from a discharge side passage formed at the discharge side of the circulating pump to an injection port which is disposed at the lower back side of a front end wall of the water tank and opens upward, and in at least one of the washing step and the rinsing step, the control unit sets the rotating speed of the circulation motor of the circulating pump to a first predetermined rotating speed so that the washing water injected from the injection port is discharged into the rotary drum, and at start of at least one of the washing step and the rinsing step, it sets the rotating speed of the circulating pump to a second predetermined rotating speed that is lower than the first predetermined rotating speed so that the washing water injected from the injection port falls on the lower part of the water tank without entering into the rotary drum, thereby executing the circulation step in the water tank.

Accordingly, for executing circulation in the circulation system, using the circulating pump and circulation passage, by absorbing the water in water tank and returning it to the water tank in the washing step or the rinsing step, the circulation passage can be connected between the water tank and each front end wall of the rotary drum just by making the connection to the front end wall of the water tank. Accordingly, without any special piping between the water tank and each front end wall of the rotary drum, the washing water can be discharged into the rotary drum from an annular outlet port formed between inner peripheries of the front end walls. Also, at start of at least one of the washing step and the rinsing step, by changing the rotating speed of the circulating pump, a tank water circulating step for circulating the washing water only in the water tank outside the rotary drum can be executed without discharging the washing water into the rotary drum. In this way, detergent and softener in the water tank outside the rotary drum are early dissolved in the washing water and made uniform in concentration, and after that, the washing water to be circulated is supplied into the rotary drum. Accordingly, detergent and softener can be early dissolved in the washing water while avoiding too much increase of the cost, and thereafter the washing water can be discharged and supplied into the rotary drum. As a result, it is possible to enhance the effects of detergent and softener and to prevent remaining of detergent on the laundry or staining thereof.

### BRIEF DESCRIPTION OF DRAWINGS

Fig. 1 is a sectional view of a drum type washing machine in one preferred embodiment of the present invention.
Fig. 2A is a sectional view of a circulating pump of the drum type washing machine.
Fig. 2B is a side view of a circulating pump of the drum type washing machine.
Fig. 2C is a bottom view of a circulating pump of the drum type washing machine.
Fig. 3A is a front view showing a duct connecting a discharge side passage to a water tank of the drum type washing machine.
Fig. 3B is a traverse sectional view showing a duct connecting a discharge side passage to a water tank of the drum type washing machine.
Fig. 3C is a vertical sectional view showing a duct connecting a discharge side passage to a water tank of the drum type washing machine.

### DETAILED DESCRIPTION OF PREFERRED EMBODIMENTS

The preferred embodiment of the present invention will be described in the following with reference to the drawings. The present invention is not limited to this preferred embodiment.

### EMBODIMENT

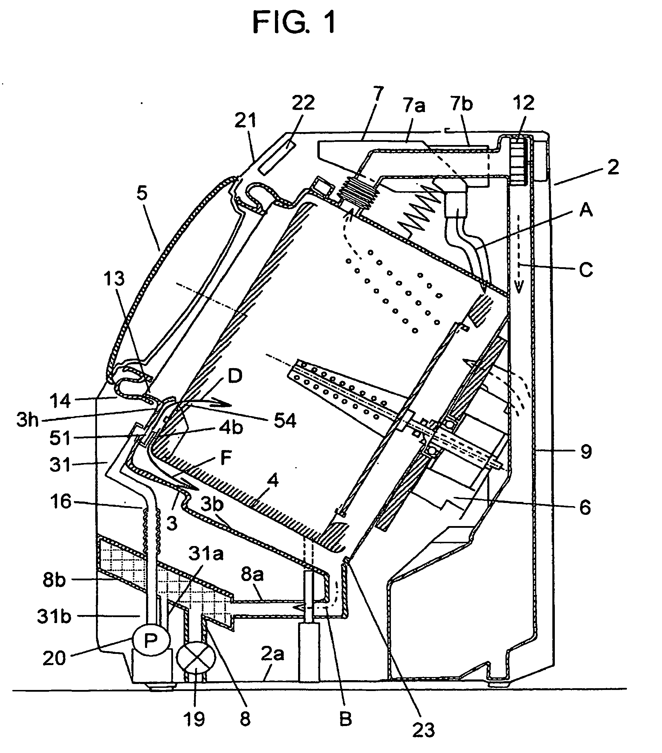

The drum type washing machine of the present preferred embodiment is, as shown in Fig. 1, configured in that water tank 3 is slidably disposed in washing machine main body 2, rotary drum 4 is rotatably disposed in water tank 3, and rotary drum 4 is rotationally driven by motor 6 mounted on the rear of water tank 3 from outside. Washing machine main body 2 is provided with door 5, and opening 13 of water tank 3 can be closed and opened via sealing material 14 fixed to the opening edge thereof.

Also, the drum type washing machine of the present preferred embodiment comprises a so-called drum type washing machine dryer having functions for executing at least a washing step, rinsing step, spin-drying step, and drying step, automatically controlling motor 6, water supply system 7, drainage system 8, and drying system 9 in accordance with the mode setting and control program. However, drying system 9 can be omitted.

Supply system 7 properly supplies water by opening and closing a solenoid valve (not shown) as shown by solid line arrow mark A. Also, the detergent of detergent container 7a is properly thrown into water tank 3 by using the water supplied.

Drainage system 8 drains the water as needed after the end of washing step or the end of rinsing step by the opening and closing operation of drain valve 19, as shown by chain line arrow mark B, via drain pipe 8a connected to the bottom of water tank 3, after passing of the water through drain filter 8b that collects waster thread or the like.

### Drain filter 8b can be removed from outside.

Drying system 9 circulates the air in water tank 3 and rotary drum 4 by means of blower 12 as shown by broken line arrow mark C in Fig. 1. Drying system 9 includes a filter (not shown) for catching waste thread and waste removing, a dehumidifier (not shown) for dehumidifying the air introduced after waste removing, and a heater (not shown) for heating the air after dehumidifying to make the air dry and high in temperature.

Also, in addition to the above, the drum type washing machine of the present preferred embodiment has a function of enhancing the washing or rinsing function by circulating the water in water tank 3 by using water circulation system 16 as needed in the washing step or rinsing step. Water circulation system 16 drives the circulating pump 20 and repeats the operation of circulating the water in water tank 3 and returning it into water tank 3 sequentially through drain pipe 8a, drain filter 8b, inflow passage 31a to circulating pump 20 in water circulation passage 31, circulating pump 20, and discharge passage 31b from circulating pump 20 in water circulation passage 31.

Also, the selection of a mode of operation course or each function is made by inputting information from operation panel 21 disposed at the front top of washing machine main body 2. Control unit 22 displays the selection in the display section of operation panel 21 according to the input information to notice it to the user. At the same time, when the start of operation is set by the input setter of operation panel 21, data from the water level detector or the like for detecting the level of water in water tank 3 is inputted to start driving. In this way, control unit 2 controls the operation of the drain valve and water supply valve to execute the operations such as washing, spin-drying, and drying.

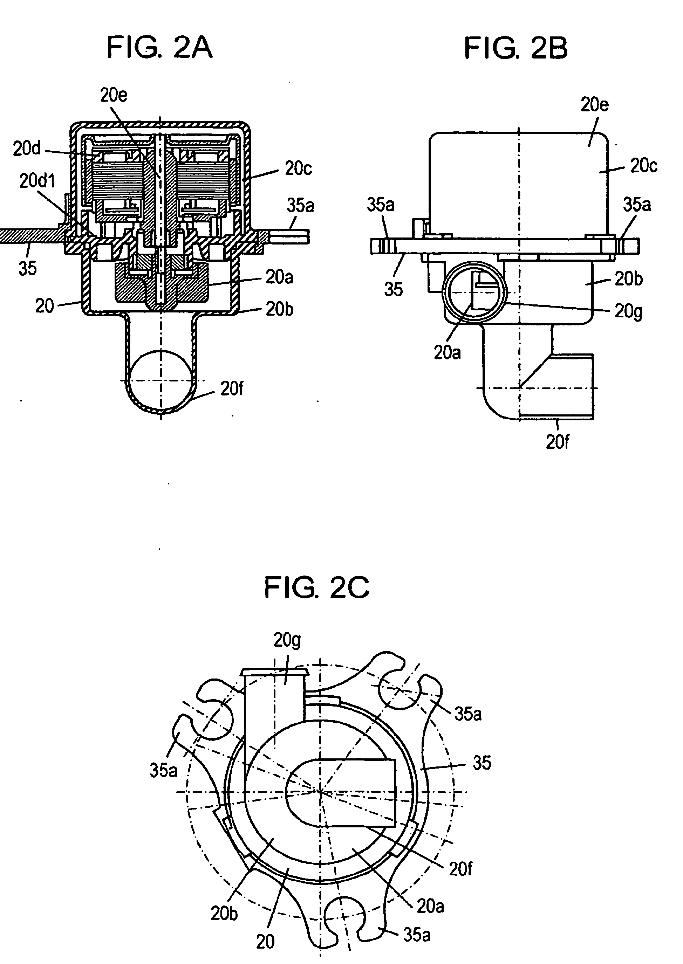

Further, circulating pump 20 is fixed on base plate 2a that is the bottom of washing machine main body 2 as shown in Fig. 1. Specifically, circulating pump 20 includes pump casing 20b made of resin with impeller 20a housed therein, as shown in Fig. 2A to Fig. 2C. The water is sucked through L-shaped suction port 20f integrally formed at the bottom of pump casing 20b. After that, the washing water is discharged from the peripheral wall of water tank 3 via discharge passage 31b through discharge port 20g integrally formed in the tangential direction of pump casing 20b. Also, circulating pump 20 includes motor casing 20d made of metal with circulation motor 20c housed therein. Pump casing 20b is integrated at its opening side with bearing partition 20d1 at the front end of motor casing 20d made of metal. In this way, impeller 20a is directly connected to motor shaft 20e. Circulating pump 20 having such a configuration is fitted in mounting seat 35 made of resin. Mounting seat 35 has nearly C-shaped mounting pieces 35a at three portions of the periphery thereof. These mounting pieces 35a are secured by screwing bolts (not shown) into bosses (not shown) of base plate 2a (see Fig. 1), and thereby, circulating pump 20 is mounted on base plate 2a.

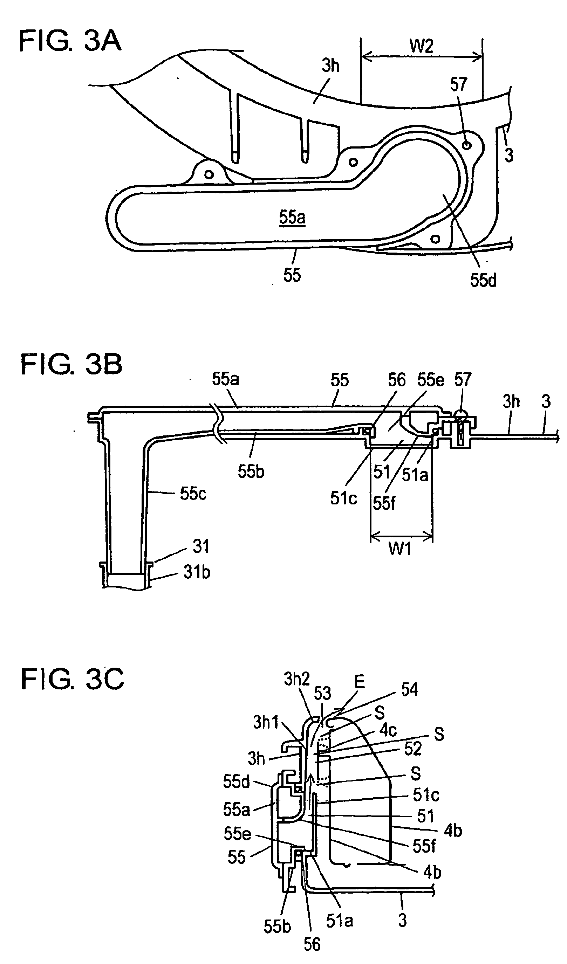

Water circulation system 16 is described in the following. Water circulation system 16 serves to circulate the washing water in the water tank into the rotary drum by using circulating pump 20 disposed in the circulation passage through the circulation passage connected to the water tank. First, as shown in Fig. 1 and Fig. 3A to Fig. 3C, injection port 51 is formed at the lowest portion of front end wall 3h around opening 13 of water tank 3. Discharge passage 31b of water circulation passage 31 is connected to injection port 51 from outside. As shown by arrow mark D in Fig. 1, washing water from discharge passage 31b is injected between the back of front end wall 3h of water tank 3 and the surface of front end wall 4b of rotary drum 4 corresponding thereto. In this way, the water is discharged into rotary drum 4 through flow passage 52 formed between front end wall 3h of water tank 3 and the surface of front end wall 4b of rotary drum 4. In this case, the motor rotating speed of circulating pump 20 is set to 3500 rpm for example. Because injection port 51 for water from discharge passage 31b is positioned so that it will not come in contact with the laundry in rotary drum 4, it is possible to prevent such trouble that the laundry is caught by injection port 51, causing the washing, rinsing or drying operation to be disturbed, or the laundry to be damaged or broken. Also, the good appearance will not be affected. In addition, since flow passage 52 is formed between front end wall 3h of water tank 3 and front end wall 4b of rotary drum 4, it is not necessary to use any special parts, and the structure is as simple and inexpensive as just using seal member 56 (see Fig. 3C) described later, reducing the risk of water leakage.

Injection port 51 opens at the back of front end wall 3h of water tank 3 in the direction of rotational center of rotary drum 4 as shown in Fig. 3C. Specifically, the port opens toward annular outlet port 53 in flow passage 52 between front end wall 3h of water tank 3 and front end wall 4b of rotary drum 4. Accordingly, washing water injected from injection port 51 is efficiently discharged to the rotational center side of rotary drum 4 through flow passage 52. Specifically, the water is efficiently discharged to the inner rotational region of rotary drum 4 in the diametrical direction toward annular outlet port 53. Therefore, it is possible to efficiently supply the washing water irrespective of the quantity of laundry. Particularly, front end wall 3h of water tank 3 includes sloped surface 3h1 sloping to the rear side of washing machine main body 2 toward the vicinity of inner periphery from the position corresponding to injection port 51 and curved surface 3h2 curving toward opening 54 of rotary drum 4 up to the inner periphery from sloped surface 3h1. In this way, washing water injected into flow passage 52 is discharged along curved surface 3h2 from sloped surface 3h1, as shown by arrow mark E in Fig. 3, toward the back side of rotary drum 4 through opening 54 of rotary drum 4. As a result, the efficiency of supplying washing water to the laundry can be enhanced.

In this case, connection port 51a to which discharge passage 31b is connected is formed at front end wall 3h of water tank 3. Injection port 51 for injecting washing water from connection port 51a to flow passage 52 opens into flow passage 52 toward the rotational center side of rotary drum 4 within predetermined range W1 of the peripheral direction. Thus, for providing front end wall 3h of water tank 3 with connection port 51a, injection port 51 that opens toward flow passage 52 is formed, and thereby, the washing water from discharge passage 31b can be smoothly guided to flow passage 52 side through injection port 51. Accordingly, the washing water can be reliably discharged into rotary drum 4 with a spread of water to the right and left in the predetermined direction from predetermined region W2 corresponding to the predetermined range in the peripheral direction of injection port 51 of annular outlet port 53. As a result, the washing water coming from connection port 51a can be reliably discharged with a spread of water to the right and left in the predetermined direction from the region within the predetermined range in the peripheral direction corresponding to injection port 51, and thereby, it can be effectively supplied to the laundry in rotary drum 4 irrespective of the quantity thereof.

Also, injection port 51 serves to guide the washing water to the opening to flow passage 52 between it and connection end 55d of discharge passage 31b connected to connection port 51a. In this way, injection port 51 disposed at connection port 51a to witch discharge passage 31b is connected may satisfy the preferable guide conditions in a simply combined fashion in mutual cooperation with connection end 55d to connection port 51a of discharge passage 31b for the purpose of guiding the washing water to the side of flow passage 52. That is, for guiding the washing water to the side of flow passage 52, in a simply combined fashion as described above, it is possible to guide the water, satisfying the preferable operation conditions such as peripherally great discharge flow width, sufficient back and forth discharge thickness, and discharge flow speed capable of increasing the water reaching distance irrespective of the quantity of laundry. Further, the piping structure is free from becoming complicated or increased in water leakage risk in particular, and it will not result in increase of the cost.

Also, injection port 51 opens, as shown in Fig. 3A, nearly at the center of the bottom of front end wall 3h of water tank 3, and injection port 51 is connected to the front end of discharge passage 31b by means of duct 55 made of resin shown in Fig. 3A and Fig. 3B. Duct 55 is formed flat back and forth by joining two sheets of front and rear members 55a, 55b. Discharge passage 31b extends forward nearly in parallel with the axial line of water tank 3 from circulating pump 20 in a one-sided fashion to the right or left with respect to the opening position of injection port 51. Further, duct 55 is connected as an extension to discharge passage 31b by means of connection pipe 55c integrated with one end of rear member 55b. Also, duct 55 almost horizontally extends to a portion near the lower part of injection port 51 from the above-mentioned one end side of rear member 55b, and after that, the other end side rises in a curved fashion up to injection port 51. Further, as shown in Fig. 3C, connection port 55e is integrated with rear member 55b at the rising portion of rear member 55b. Connection port 55e is connected to connection port 51a opened in front end wall 3h of water tank 3 of injection port 51 via seal member 56 disposed therebetween, and both are fastened by means of screw 57. In this way, duct 55 is formed flat back and forth, which is connected to circulating pump 20 side protruded toward the outer periphery of water tank 3 from connection end 55d to connection port 51a of front end wall 3h of water tank 3, and thereby, the piping can be disposed even in a small space between front end wall 3h of water tank 3 and the front wall of washing machine main body 2. In addition, because the shape of duct 55 is flat, the washing water can be injected into flow passage 52 from connection port 51a toward injection port 51, adjusting the water flow width and thickness so as to match the opening of injection port 51. As a result, the washing water can be reliably supplied from annular outlet port 53 without disturbance of the flow in a range of discharging speed enough to increase the water reaching distance with great discharge width in the peripheral direction and sufficient discharge thickness in the forward and backward direction. Accordingly, it is possible to further enhance the washing and rinsing effects. Also, duct 55 is laterally extended down to near the connection port 51a of injection port 51 at the bottom of front end wall 3h from the outer periphery of water tank 3, and the portion curving and rising up to connection port 51a therefrom is connected to connection port 51a. Accordingly, the washing water adjusted to a flat flow can be guided to connection port 51a and injection port 51 identical in flat direction without being disturbed by the curved shape of the rising portion, and the water can be injected to the predetermined region in the peripheral direction of flow passage 52. Accordingly, the washing water can be can be reliably discharged from a wider portion of annular outlet port 53, and it is possible to enhance the action of washing water imparted to the laundry.

Particularly, injection port 51 is formed by receiving wall 51c integrated therewith in a position a little shifted to the front end wall 4b side of rotary drum 4 being parallel with it from connection port 51a opened in front end wall 3h of water tank 3 so as to open toward annular outlet port 53 between it and the upper edge of connection port 51a. Connection port 51a comprises reducing wall 55f for smoothly reducing the injection passage with R-surface from the duct 55 side toward injection port 51 between it and receiving wall 51c. Due to reducing wall 55f, the washing water flowing from duct 55 to injection port 51 is activated to increase its flowing speed strongly along sloped surface 3h1 and curved surface 3h2 at the back of front end wall 3h of water tank 3. In this way, the washing water can be reliably discharged upward and obliquely backward into rotary drum 4 through the predetermined passage and can be supplied in a wider range to the laundry in rotary drum 4 through a longer flow passage describing a parabola with a spread of water to the right and left. However, it is allowable to form the reducing passage to increase the flowing speed in any way between connection end 55d to connection port 51a of duct 55 and injection port 51. That is, for guiding the washing water coming from injection port 51 disposed at connection port 51a to the side of flow passage 52, it is possible to guide the water, satisfying the preferable operation conditions such as peripherally great discharge flow width, sufficient back and forth discharge thickness, and discharge flow speed capable of increasing the water reaching distance irrespective of the quantity of laundry due to the simple combination style of connection end 55d to connection port 51 of discharge passage 31b. Further, the piping structure is free from becoming complicated or increased in water leakage risk in particular, and it will not result in increase of the cost.

Also, frond end wall 4b of rotary drum 4 is, as shown in Fig. 3C, formed with annular rib-like protrusion 4c peripherally traversing flow passage 52, leaving the reducing space S between it and sloped surface 3h1. Further, the position of rib-like protrusion 4c radially changes in a wave-like fashion. Therefore, when rotary drum 4 is rotated, rib-like protrusion 4c radially changes the traversing position with respect to flow passage 52 in the vicinity of injection port 51, that is, the reducing space S forming positions as shown by three specific positions in Fig. 3C. As a result, there are two cases such that flow passage 52 is reduced by the reducing space S in the vicinity of annular outlet port 53 with respect to the flow of washing water going to annular outlet port 53 and that it is reduced by the reducing space S at a position far from annular outlet port 53, and therefore, the angle of going into rotary drum 4 is vertically deflected. Accordingly, it is possible to apply the washing water in a spreading fashion to the laundry in a wide range axially of rotary drum 4.

Rib-like protrusion 4c is a discharge guide peripherally disposed in a non-uniform fashion at the front end wall 3h side of rotary drum 4. Therefore, the discharging direction of washing water injected into flow passage 52 and discharged into rotary drum 4 from annular outlet port 53 is disturbed or changed forward and backward. Accordingly, the position where the discharged washing water reaches the laundry in rotary drum 4 is disturbed or changed forward and backward. Probably available as such a discharge guide is at least one out of an inner periphery waved in the peripheral direction, a wall surface peripherally waved forward and backward, a rib-like protrusion or blade protruded at the flow passage side and peripherally waved or/and being intermittent, and a block that peripherally changes the passing resistance of washing water injected through the flow passage. Such a discharge guide is able to display an action to disturb or change the discharging direction forward and backward. Accordingly, combinations of these can be employed as much as possible.

Due to the parabolic supply action, and forward and backward spreading action, as described above, the washing water evenly acts upon the laundry in the forward and backward direction, and it is possible to enhance the detergent dissolving effect, washing effect, and rinsing effect.

As already described, when washing water is injected simply into rotary drum 4 from injection port 51, in the initial stage of washing step, the washing water containing detergent not completely dissolved is directly injected to the laundry in rotary drum 4. As a result, at the end of washing, some detergent not fully dissolved may sometimes remain in the surface and inside of the laundry. Also, when a softener is applied in the initial stage of rinsing step, a highly concentrated softener is directly injected to the laundry in rotary drum 4. As a result, the laundry is sometimes stained or the like due to the highly concentrated softener. On the other hand, in order to prevent such trouble, if a special injection nozzle capable of injecting outside the rotary drum 4 as well, it will make the piping structure further complicated, causing the cost to more increase.

Therefore, in the present preferred embodiment, for circulating the water in water tank 3 by means of circulating pump 20, there is provided a tank water circulating step for controlling the rotating speed of circulating pump 20 so that, at start of at least one step out of the washing step and the rinsing step, the washing water injected from injection port 51 does not enter into rotary drum 4 but, as shown by the arrow mark F in Fig. 1, it passes between receiving wall 51c and front end wall surface 4b of rotary drum 4 and falls toward the bottom of water tank 3. Such control is performed by using a DC brush-less motor capable of controlling the rotating speed for example. In this case, the motor rotating speed of circulating pump 20 is set to 1000 rpm for example. Executing the tank water circulating step, it is possible to circulate the washing water with use of water tank 3 located outside rotary drum 4 and water circulation system 16.

Thus, in the tank water circulating step, the washing water is circulated by circulating pump 20 with use of water tank 3 and water circulation system 16, and thereby, the detergent and softener can be early dissolved in the washing water, and the concentration thereof can be made uniform. And, after the washing water becomes uniform in concentration, the rotating speed of circulating pump 20 is increased to the rotating speed high enough to supply the washing water discharged from injection port 51 to the laundry in the rotary drum 4. In this way, the effects of detergent and softener can be enhanced, and it is possible to prevent the generation of staining or the like caused due to sticking of remaining detergent to the laundry or direct sticking of highly concentrated softener to the laundry.

Also, in the initial stage of water supplying step of at least one step out of the washing step and the rinsing step, lag time is provided before start of the tank water circulating step after start of water supply, for example, lapse of 10 seconds or lapse of time until the water level reaches about 40 mm from the bottom of water tank 3. In this way, it is possible to prevent the occurrence of troubles such as driving the circulating pump 20 without sufficient water in circulating pump 20 or continuously driving the circulating pump 20 without water in circulating pump 20 in such case that the water tap is not opened by the user

Accordingly, it is possible to avoid the occurrence of troubles such as generation of bubble catching noise or other abnormal noise caused due to insufficient water in circulating pump 20 or abnormal temperature rise caused due to continuous long-time driving of circulating pump 20 without water in circulating pump 20, and thereby, the reliability of the circulating pump can be improved.

Also, in the present preferred embodiment, there is provided bath water absorbing unit 7b for absorbing bath water and supplying the bath water into water tank 3. With bath water absorbing unit 7b provided, when operated to use bath water, circulating pump 20 is driven after completing the operation of bath water absorbing unit 7b, and thereby, water bath absorbing portion 7b and circulating pump 20 are prevented from being driven at the same time.

Accordingly, it is possible to prevent abnormal driving noise generated when two motors of bath water absorbing unit 7b and circulating pump 20 are driven at the same time, and giving discomfort feeling to the user can be avoided.

Also, in the present preferred embodiment, there is provided a reserved operation setter (not shown) for setting reserved operations. When reserved operation setting is made by the reserved operation setter in the operation, the time of the tank water circulating step is set for example two times longer as compared with non-reserved operation, and thereby, detergent that is liable to solidify during the standby in reservation can be sufficiently dissolved.

As a result, it is possible to obtain sufficient washing power in the reserved operation and to avoid remaining of detergent or the like in the laundry.

Further, in the present preferred embodiment, there is provided washing water temperature detector 23 for detecting the temperature of washing water in water tank 3. When the temperature detected by washing water temperature detector 23 is judged to be as low as about 5°C for example, the time for the tank water circulating step is set for example about two times longer as compared with such normal case that the water temperature detected is for example about 20°C, and thereby, detergent can be sufficiently dissolved even at a low water temperature.

As a result, it is possible to obtain sufficient washing power and to avoid remaining of detergent or the like in the laundry even when the water temperature is so low as to give rise to lowering of the washing power or remaining of detergent or the like in the laundry.

In the present preferred embodiment, it is configured in that circulating pump 20 for circulating the water in water tank 3 is installed on base plate 2a that is the bottom of washing machine main body 2. However, the present invention is not limited to this configuration, and it is allowable to install circulating pump 20 on underside 3b of water tank 3, and same effects can be obtained.

As described above, the present invention comprises a cylindrically shaped rotary drum with a bottom, a water tank in which the rotary drum is installed in such manner that the direction of rotary axis is horizontal or inclined downward from the horizontal direction toward the rear side or bottom thereof from the open front side, a motor for rotationally driving the rotary drum, a water circulation system for circulating washing water in the water tank into the rotary drum by using a circulating pump equipped with a circulation motor disposed in the circulation passage and capable of changing the rotating speed through the circulation passage connected to the water tank, and a control unit for controlling the motor or the like to execute at least one of the washing step and the rinsing step, wherein the water circulation system is configured so as to guide the washing water from a discharge side passage formed at the discharge side of the circulating pump to an injection port which is disposed at the lower back side of a front end wall of the water tank and opens upward, and in at least one of the washing step and the rinsing step, the control unit sets the rotating speed of the circulation motor of the circulating pump to a first predetermined rotating speed so that the washing water injected from the injection port is discharged into the rotary drum, and at start of at least one of the washing step and the rinsing step, it sets the rotating speed of the circulating pump to a second predetermined rotating speed that is lower than the first predetermined rotating speed so that the washing water injected from the injection port falls on the lower part of the water tank without entering into the rotary drum, thereby executing the circulation step in the water tank.

Accordingly, for executing circulation in the circulation system, using the circulating pump and circulation passage, by absorbing the water in the water tank and returning it to the water tank in the washing step or the rinsing step, the circulation passage can be connected between the water tank and each front end wall of the rotary drum just by making the connection to the front end wall of the water tank. Accordingly, without any special piping between the water tank and each front end wall of the rotary drum, the washing water can be discharged into the rotary drum from an annular outlet port formed between inner peripheries of the front end walls. Also, at start of at least one of the washing step and the rinsing step, by changing the rotating speed of the circulating pump, the tank water circulating step for circulating the washing water only in the water tank outside the rotary drum can be executed without discharging the washing water into the rotary drum. In this way, detergent and softener in the water tank outside the rotary drum are early dissolved in the washing water and made uniform in concentration, and after that, the washing water to be circulated can be supplied into the rotary drum. Accordingly, detergent and softener can be early dissolved in the washing water while avoiding too much increase of the cost, and thereafter the washing water can be discharged and supplied into the rotary drum. As a result, it is possible to enhance the effects of detergent and softener and to prevent remaining of detergent in the laundry or staining thereof.

Also, the present invention is provided with lag time that is a length of time until lapse of specified time or reaching the specified water level before start of the tank water circulating step after start of water supply in at least one of the washing step and the rinsing step.

In this way, it is possible to avoid the occurrence of troubles such as driving the circulating pump without sufficient water in the circulating pump or continuously driving the circulating pump without water in the circulating pump when the water tap is not opened by the user. As a result, generation of bubble catching noise or other abnormal noise caused due to insufficient water in the circulating pump or abnormal temperature rise due to continuous long-time driving of the circulating pump can be avoided, and it is possible to improve the reliability of the circulating pump.

Also, the present invention comprises a bath water absorbing unit which absorbs bath water and supplies the bath water into the water tank, and when the bath water absorbing unit is operated to use bath water, the tank water circulating step is started after bath water supply is completed by the bath water absorbing unit.

In this way, it is possible to avoid giving discomfort feeling to the user with abnormally large driving noise generated by simultaneous driving of the bath water absorbing unit and circulating pump.

Also, the present invention further comprises a washing water temperature detector for detecting the temperature of washing water in the water tank, and when the water temperature detected by the washing water temperature detector is judged to be low, the time for the tank water circulating step is set longer than the setting to be made when the water temperature is high.

Accordingly, even when the washing water temperature is low, detergent can be sufficiently dissolved, and it is possible to avoid lowering of the washing power and remaining of detergent or the like in the laundry.

## Claims

1. A drum type washing machine comprising a cylindrically shaped rotary drum (4) with a bottom, a water tank (3) in which the rotary drum (4) is installed in such manner that the direction of rotary axis is horizontal or inclined downward from the horizontal direction toward the rear side or bottom thereof from an open front side, a motor (6) for rotationally driving the rotary drum (4), a water circulation system (16) for circulating washing water in the water tank (3) into the rotary drum (4) by using a circulating pump (20) equipped with a circulation motor (20c) disposed in a circulation passage (31), and a control unit (22) for controlling the motor (6) or the like to execute at least one of the washing step and the rinsing step, **characterized in that** the circulating pump (20) is capable of changing the rotating speed through the circulation passage (31) connected to the water tank (3), wherein the water circulation system (16) is configured so as to guide the washing water from a discharge side passage formed at the discharge side of the circulating pump (20) to an injection port (51) which is disposed at the lower back side of a front end wall (3h) of the water tank (3) and opens upward, and in at least one of the washing step and the rinsing step, the control unit (22) sets the rotating speed of the circulation motor (20c) of the circulating pump (20) to a first predetermined rotating speed so that the washing water injected from the injection port (51) is discharged into the rotary drum (4), and at start of at least one of the washing step and the rinsing step, it sets the rotating speed of the circulating pump (20) to a second predetermined rotating speed that is lower than the first predetermined rotating speed so that the washing water injected from the injection port (51) falls on the lower part of the water tank (3) without entering into the rotary drum (4), thereby executing a tank water circulating step.

2. The drum type washing machine of claim 1, wherein there is provided lag time that is a length of time until lapse of a specified time or reaching a specified water level before start of the tank water circulating step after starting water supply in at least one of the washing step and the rinsing step.

3. The drum type washing machine of claim 1, further comprising a bath water absorbing unit (7b) for absorbing bath water and supplying the bath water into the water tank (3), wherein when the bath water absorbing unit (7b) is operated to use bath water, the tank water circulating step is started after bath water supply is completed by the bath water absorbing unit (7b).

4. The drum type washing machine of claim 1, further comprising a washing water temperature detector (23) for detecting the temperature of washing water in the water tank (3), wherein when the water temperature detected by the washing water temperature detector (23) is judged to be low, the time for the tank water circulating step is set longer than the setting to be made when the water temperature is high.

## Patentansprüche

1. Trommelwaschmaschine, aufweisend eine zylindrisch gebildete drehbare Trommel (4) mit einem Boden bzw. einer Unterseite, einen Wasserbehälter (3), in welchem die drehbare Trommel (4) in einer derartigen Weise installiert ist, dass die Richtung der Rotationsachse horizontal oder von der horizontalen Richtung abwärts bzw. nach unten gerichtet geneigt ist, und zwar von einer offenen vorderen Seite in Richtung der hinteren Seite oder des Bodens davon, einen Motor (6) zum drehbaren Antreiben der drehbaren Trommel (4), ein Wasserzirkulationssystem (16) zum Zirkulieren von Waschwasser in dem Wasserbehälter (3) in die drehbare Trommel (4), durch Verwenden einer Zirkulationspumpe bzw. Umwälzpumpe (20), die mit einem Zirkulationsmotor bzw. Umwälzmotor (20c) ausgestattet ist, und zwar angeordnet in einer Zirkulations- bzw. Umwälzpassage bzw. -durchgang (31), und eine Steuereinheit bzw. Regeleinheit (22) zum Steuern bzw. Regeln des Motors (6) oder dergleichen, um wenigstens einen von dem Waschschritt und dem Spülschritt durchzuführen, **dadurch gekennzeichnet, dass** die Zirkulationspumpe bzw. Umwälzpumpe (20) imstande ist, die Rotationsgeschwindigkeit durch die Zirkulations- bzw. Umwälzpassage bzw. -durchgang (31) zu ändern, die bzw. der mit dem Wasserbehälter (3) verbunden ist, wobei das Wasserzirkulationssystem (16) konfiguriert ist, um das Waschwasser von einer Ausbringungsseitenpassage bzw. -durchgang, die bzw. der an der Ausbringungsseite von der Zirkulationspumpe bzw. Umwälzpumpe (20) gebildet ist, zu einem Injektions- bzw. Einspritzport (51) zu führen, welcher an der unteren hinteren Seite von einer vorderen Endwand (3h) von dem Wasserbehälter (3) angeordnet ist und sich nach oben gerichtet öffnet, und wobei in wenigstens einem von dem Waschschritt und dem Spülschritt die Steuereinheit bzw. Regeleinheit (22) die Rotationsgeschwindigkeit von dem Zirkulationsmotor bzw. Umwälzmotor (20c) von der Zirkulationspumpe bzw. Umwälzpumpe (20) in eine erste vorherbestimmte Rotationsgeschwindigkeit einstellt, so dass das Waschwasser, das von dem Injektions- bzw. Einspritzport (51) eingespritzt bzw. eingespeist wird, in die drehbare Trommel (4) ausgebracht bzw. abgegeben wird, und sie an dem Start von wenigstens einem von dem Waschschritt und dem Spülschritt die Rotationsgeschwindigkeit von der Zirkulationspumpe bzw. Umwälzpumpe (20) in eine zweite vorherbestimmte Rotationsgeschwindigkeit einstellt, die geringer als die erste vorherbestimmte Rotationsgeschwindigkeit ist, so dass das Waschwasser, das von dem Injektions- bzw.
Einspritzport (51) eingespritzt bzw. eingespeist wird, auf den unteren Teil von dem Wasserbehälter (3) fällt, ohne in die drehbare Trommel (4) einzutreten bzw. einzudringen, wodurch ein Behälterwasserzirkulationsschritt durchgeführt wird.

2. Trommelwaschmaschine von Anspruch 1, wobei eine Verzögerungszeit zur Verfügung gestellt wird, die eine Zeitdauer ist, und zwar bis zum Verstreichen von einer spezifizierten bzw. festgelegten Zeit oder dem Erreichen eines spezifizierten bzw. festgelegten Wasserniveaus vor dem Start von dem Behälterwasserzirkulationsschritt nach dem Starten der Wasserzufuhr in wenigstens einem von dem Waschschritt und dem Spülschritt.

3. Trommelwaschmaschine von Anspruch 1, ferner aufweisend eine Badwasserabsorptionseinheit (7b) zum Absorbieren von Badwasser und Zuführen des Badwassers in den Wasserbehälter (3), wobei wenn die Badwasserabsorptionseinheit (7b) betätigt wird, um Badwasser zu verwenden, wird der Behälterwasserzirkulationsschritt gestartet, nachdem die Badwasserzufuhr durch die Badwasserabsorptionseinheit (7b) vervollständigt bzw. beendet ist.

4. Trommelwaschmaschine von Anspruch 1, ferner aufweisend einen Waschwassertemperaturdetektor (23) zum Detektieren der Temperatur von Waschwasser in dem Wasserbehälter (3), wobei, wenn die Wassertemperatur, die durch den Waschwassertemperaturdetektor (23) detektiert wird, bewertet wird, zu niedrig zu sein, wird die Zeit für den Behälterwasserzirkulationsschritt länger eingestellt als das Einstellen bewirkt wird, wenn die Wassertemperatur hoch ist.

## Revendications

1. Machine à laver à tambour comprenant un tambour rotatif (4) de forme cylindrique avec un fond, un réservoir d'eau (3) dans lequel le tambour rotatif (4) est installé de sorte que la direction de l'axe de rotation est horizontale ou inclinée vers le bas à partir de la direction horizontale vers le côté arrière ou son fond à partir d'un côté avant ouvert, un moteur (6) pour entraîner en rotation le tambour rotatif (4), un système de circulation d'eau (16) pour faire circuler l'eau de lavage dans le réservoir d'eau (3) dans le tambour rotatif (4) en utilisant une pompe de circulation (20) équipée d'un moteur de circulation (20c) disposé dans un passage de circulation (31), et une unité de commande (22) pour commander le moteur (6) ou similaire afin d'exécuter au moins l'une parmi l'étape de lavage et l'étape de rinçage, **caractérisée en ce que** la pompe de circulation (20) peut changer la vitesse de rotation à travers le passage de circulation (31) raccordé au réservoir d'eau (3), dans laquelle le système de circulation d'eau (16) est configuré pour guider l'eau de lavage à partir d'un passage latéral de décharge formé du côté de la décharge de la pompe de circulation (20) vers un orifice d'injection (51) qui est disposé du côté arrière inférieur d'une paroi d'extrémité avant (3h) du réservoir d'eau (3) et s'ouvre vers le haut, et dans au moins l'une parmi l'étape de lavage et l'étape de rinçage, l'unité de commande (22) règle la vitesse de rotation du moteur de circulation (20c) de la pompe de circulation (20) sur une première vitesse de rotation prédéterminée de sorte que l'eau de lavage injectée par l'orifice d'injection (51) est déchargée dans le tambour rotatif (4), et au début d'au moins l'une parmi l'étape de lavage et l'étape de rinçage, elle règle la vitesse de rotation de la pompe de circulation (20) sur une seconde vitesse de rotation prédéterminée qui est inférieure à la première vitesse de rotation prédéterminée de sorte que l'eau de lavage injectée par l'orifice d'injection (51) tombe sur la partie inférieure du réservoir d'eau (3) sans entrer dans le tambour rotatif (4), exécutant ainsi une étape de circulation d'eau de réservoir.

2. Machine à laver à tambour selon la revendication 1, dans laquelle on prévoit un temps de réponse qui est une longueur de temps jusqu'à l'écoulement d'un temps spécifié ou l'atteinte d'un niveau d'eau spécifié avant le commencement de l'étape de circulation d'eau de réservoir après avoir commencé l'alimentation en eau dans au moins l'une parmi l'étape de lavage et l'étape de rinçage.

3. Machine à laver à tambour selon la revendication 1, comprenant en outre une unité d'absorption d'eau de bain (7b) pour absorber l'eau de bain et amener l'eau de bain dans le réservoir d'eau (3), dans laquelle lorsque l'unité d'absorption d'eau de bain (7b) est actionnée pour utiliser l'eau de bain, l'étape de circulation d'eau de réservoir est commencée après l'achèvement de l'alimentation en eau de bain par l'unité d'absorption d'eau de bain (7b).

4. Machine à laver à tambour selon la revendication 1, comprenant en outre un détecteur de température d'eau de lavage (23) pour détecter la température de l'eau de lavage dans le réservoir d'eau (3), dans laquelle lorsque la température d'eau détectée par le détecteur de température d'eau de lavage (23) est considérée comme étant basse, le temps pour l'étape de circulation d'eau de réservoir est réglé plus long que le réglage à faire lorsque la température d'eau est élevée.
